# EUROPEAN PATENT SPECIFICATION

(11) **EP 0 483 706 B1**
(45) Date of publication and mention of the grant of the patent: **09.04.1997**
(21) Application number: 91118294.7
(22) Date of filing: 26.10.1991
(51) Int. Cl.: H02H 11/00

(54) **Method for blocking and interlocking in connection with the operation of electric switching devices**
Verfahren zur Blockierung und Verriegelung bei Schalthandlungen in elektrischen Schaltanlagen
Procédé de blocage et d'interverrouillage relatif à la commande de dispositifs de commutation électriques

(30) Priority: 30.10.1990 SE 9003449
(43) Date of publication of application: 06.05.1992
(73) Proprietor: ASEA BROWN BOVERI AB, 721 83 Västeras (SE)
(72) Inventor: Byman, Carl, S-723 40 Västeras (SE); Malmqvist, Lars-Gunnar, S-730 50 Skultuna (SE); Setthammar, Rolf, S-722 46 Västeras (SE); Wimmer, Wolfgang, CH-5417 Untersiggenthal (CH)
(74) Representative: Boecker, Joachim, Dr.-Ing.

(56) References cited:
- EP-A- 0 103 137
- DE-C- 3 643 755

## Description

The invention relates to method for blocking and interlocking in connection with the operation of electric switching devices according to the precharacterising part of claim 1.

Switchgear intended for transformation and distribution of electric power comprises, inter alia, switching devices such as circuit breakers, disconnectors and grounding switches. In the following description, these will be commonly referred to as switching devices. The method according to the invention serves to ensure permissible operation of such switching devices.

Disconnectors and grounding switches are normally designed to carry but not close or break large currents. If a disconnector is operated in current-carrying state, an arc is formed across the contacts, which causes a considerable risk of personal injury and damage to switchgear with ensuing costly interruptions in the operation.

To eliminate the above-mentioned risks, methods and systems for blocking and interlocking are used, which prevent all operation of switching devices which may cause the above-mentioned damage. According to the state of the art, blocking and interlocking are realized either by mechanical or electrical systems.

The mechanical interlocking may be direct-acting by mechanical connection, for example between a disconnector and a grounding switch. The interlocking may also be performed with the aid of a system of keys between the switching devices. In case of key interlocking, permission to operate is given with one or more keys obtained in the operation of other apparatus in the blocking chain which keys then represent an operating state which permits operation of the switchgear device in question.

The electric interlocking is based on sensing the positions of other breakers and disconnectors in the system and electrically comparing these positions with predetermined conditions. This has previously been realized with the aid of relays. The necessary position information to give permission for operation will then, in principle, be immediately available.

Methods for control and supervision of switching devices using computer-controlled systems are also available. Such a system may comprise distributed computers with serial communication between the computers. Each computer is intended to take care of functions for a bay comprising those switching devices which are included in, for example, the connection of a line or a transformer to the busbars. The switching devices of the bay are controlled from the respective computer which contains a program module which attends to the interlocking within the bay. To be able to take into account the operating state in other bays, the positions for the switching devices in these bays are obtained by means of serial communication.

In such a system with distributed computers and serial transmission between the distributed computers, the position information is updated cyclically or upon a change. The problem then arises that, even at a high speed of communication, there is a gap of time during which the information about the operating position is uncertain. This means that also the interlock condition becomes uncertain. The time gap may vary depending on the transmission speed and the transmission principle.

The EP-A-0 103 137 describes a system where besides individual computers in each of the bays there is a central computer which communicates with each of the bay computers. The bay computers communicate their state to the central computer, and the central computer cyclically computes a picture of the total state of all switching devices included in the system. This total state picture is remitted to all the bay computers. If an operation command is given for one of the bays, the checking of whether this command is allowed to be executed takes place only after the next but one updated total state has been communicated from the central computer to the bay computer. In this way it is made sure that the effect of the intended command is taken into consideration when checking the permissibility of its execution.

The DE-C-3 643 755 describes a system for preventing unallowed operation of switching devices in a power distribution system whereby each switching device is provided with a protection circuit which is wired to one central command station. The document teaches to energize all the protection circuits only if a switching operation is intended. This is done, on the one hand, to save energy and, on the other hand, to avoid the occurrence of erroneous switching operations. If it is intended to execute a switching operation, first the protection circuits are energized and then all other switches are blocked to prevent two switching operations from occurring at the same time.

The invention aims at developing a method for blocking and interlocking according to the preamble of the claim which excludes the above-described uncertainty about the operating positions of all switching devices involved in the intended switching operation.

To achieve this aim the invention suggests a method for reservation and interlocking according to the introductory part of the claim, which is characterized by the features of the characterizing part of the claim.

The invention comprises supplementing the method for blocking and interlocking, according to the state of the art, by introducing a reservation function which blocks all switching devices, whose positions are used for evaluation about permission to operate. Thus, it is prevented that the position of the switching devices is changed during the time gap which arises between the position updatings. This can take place by reserving all of those switching devices, by means of the communication system, the change in position of which influences the interlock condition of the intended operation. The reservation is intended to remain until the operation has been carried out.

By way of example, the invention will now be described in greater detail with reference to the accompanying drawings showing in
- Figure 1: a possible configuration of a computer system for control and supervision of switching devices with distributed computers with serial communication for a plurality of bays,
- Figure 2: an example of how the computer of each bay may be structured in different modules according to the invention,
- Figure 3: a flow chart of all the actions which need to be taken, according to the invention, after a start order for operation of a switching device has been given and the execution to secure the permissible function.

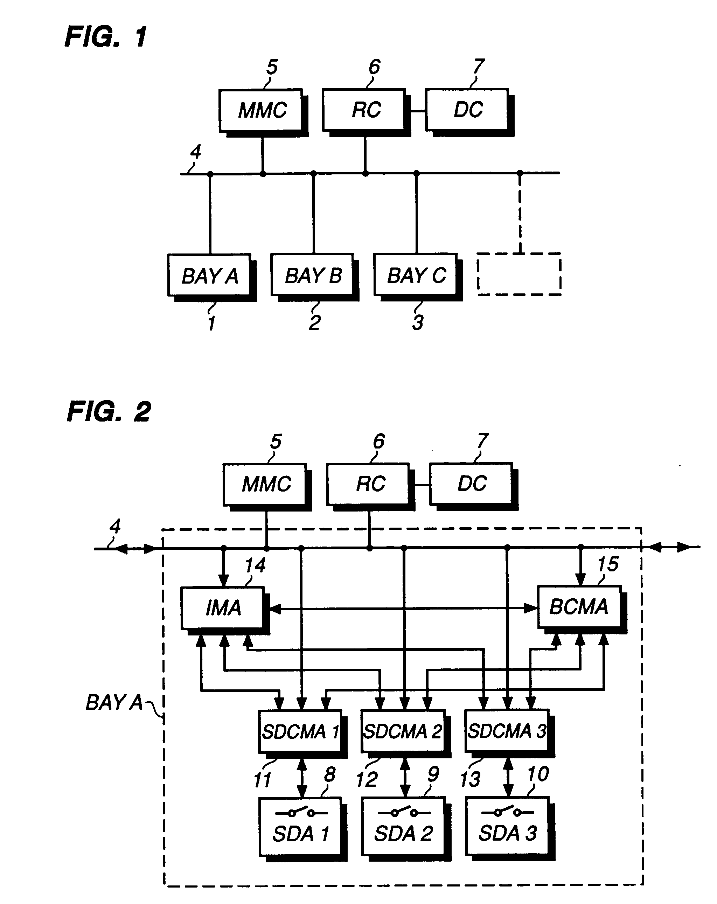

A method according to the invention for reservation, supervision, control and operation of switching devices based on a computer-controlled system is shown, in broad outline, in Figure 1. As in the prior art, the system is based on serial communication between the different bays. The system according to Figure 1 comprises three bays, BAY A, BAY B and BAY C with reference numerals 1, 2 and 3. The communication between the bays is performed with the aid of a communication bus 4. To be able to communicate with the different bays from the outside, one or more so-called man-machine communication units MMC or 5 is/are provided. To the communication bus there is also connected a unit RC or 6 for remote communication, which can be controlled from a dispatch center DC or 7.

Each bay computer is structured in a number of modules each of which has a specific function or a specific switching device to handle. These modules will be described in some more detail with reference to Figure 2, which shows the structure within BAY A.

In the example shown, BAY A comprises three switching devices SDA 1, SDA 2 and SDA 3 with reference numerals 8, 9 and 10. Each one of these switching devices is provided, in accordance with the state of the art, with a respective switching device control module SDCMA 1, SDCMA 2 and SDCMA 3, respectively, with the reference numerals 11, 12 and 13, which, inter alia, contain information about the position of the switching device, that is, whether it is open or closed.

As mentioned, it is also part of the state of the art that the computer of each bay comprises a program module IMA or 14 which handles the interlocking within the bay for all switching devices included in the bay. In the following, this program module will be referred to as an interlock module. An example of the task of the interlock module may be to prevent an energized line from being grounded via a line grounding device.

In addition, in accordance with the state of the art, each bay also comprises a bay control module BCMA or 15, which controls certain functions which are part of the function of the bay, for example blocking of the operation, alarm blocking, selection of operating places, etc. The reservation function which constitutes the predominant feature of the invention is also to be regarded as such a function and is consequently part of the bay control module.

The method for interlocking and reservation in connection with an intended operation of some switching device according to the invention will be clear from the following description:

Information about the need for operation of some switching device in a bay may come from an operator via some MMC unit, from the dispatch center by way of remote communication, or else from some automatic function. Independently of where the requirement for operation originates from, the relevant switching device control module is requested to initiate a procedure to find out whether all the necessary permission conditions for operation are fulfilled and to make the necessary reservations, that is, prepare the execution of the operation.

If the relevant switching device is not reserved by some other function or blocked because of some fault, a request is passed from the switching device control module to the bay control module to be allowed to carry out an operation.

When this request arrives at the bay control module, it is checked whether any other switching device in the bay at the same time receives permission to carry out an operation or whether the entire bay is at the same time reserved from some other bay. If this is not the case, a signal is sent to the other switching device control modules in the bay for reservation of the other switching devices in the bay while the required operation is in progress.

If, on the other hand, any switching device is already reserved, a signal to this effect is sent via the bay control module to that switching device control module which has requested reservation, whereby the operator or the initiating function is informed and the operation is interrupted.

If the switching device which is to be operated is dependent on information from other bays for its interlock conditions, the bay control module sends a request for reservation to these other bays in the same way as above. The bay control modules in these other bays block the switching devices of the bays so that these cannot be operated, whereupon a clearance signal about the blocking together with position information for the switching devices of the bay is sent back to the bay making the inquiry.

When the bay control module has received confirmation from the other bay control modules that all is clear for operation after checking that the monitoring time has not expired, a clearance signal is given to the switching device control module in question.

When the bay control module has received the necessary confirmation from the other bays that these are reserved, an evaluation of the interlock conditions for the relevant switching device is performed.

When the switching device control module has received a go-ahead signal and the interlock conditions are fulfilled, information about this is given to the operator, the dispatch center or the automatic function, whereupon the switching device may be operated.

When the operation has been carried out, the reservation is cancelled.

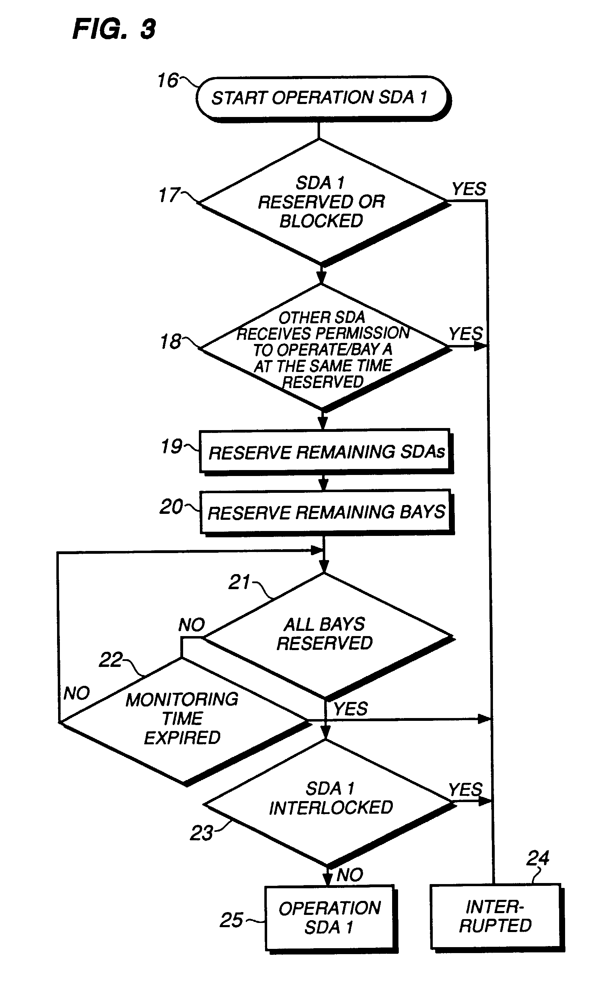

The reservation process can also be described somewhat simplified by means of the flow chart in Figure 3. In the example shown, switching device SDA 1 in BAY A is to be operated.

After a command for "START OPERATION SDA 1" (symbol 16) has been given, it is checked whether SDA 1 is "RESERVED OR BLOCKED" (symbol 17). If this is the case, the operating sequence is interrupted.

If this is not the case, it is checked whether "OTHER SDA RECEIVES PERMISSION TO OPERATE/BAY A AT THE SAME TIME RESERVED" (symbol 18). If this is the case, the operating sequence is interrupted.

If this is not the case, an order to "RESERVE REMAINING SDAs" (symbol 19) is given, whereafter also an order to "RESERVE REMAINING BAYS" (symbol 20), is given.

Thereafter it is checked whether there are "ALL BAYS RESERVED" (symbol 21). If no go-ahead signal has been received from all bays within a certain time from symbol 22 "MONITORING TIME EXPIRED", the operating sequence is interrupted.

When information is received that all bays are reserved, it is checked whether "SDA 1 (is) INTERLOCKED" (symbol 23). If this is the case, the operating sequence is "INTERRUPTED" (symbol 24).

If SDA 1 is not interlocked, the whole sequence for reservation has been completed and an order for "OPERATION SDA 1" (symbol 25) can be given.

## Claims

1. Method for blocking and interlocking in connection with the operation of electric switching devices (8,9,10) included in one of a plurality of bays (1,2,3) belonging to a switchgear, the control between the bays being performed by means of a communication bus (4) with a computerized serial communication system with one computer in each bay, **characterized** in that when an order for operation of a switching (8,9,10) device is given, the following steps including a reservation function are executed:
- it is checked whether the switching device in question is reserved or blocked (17), and if this is the case the operating sequence is interrupted;
- if the afore-said is not the case, it is checked whether any other switching device in the same bay (1,2,3) at the same time receives permission to operate or that the entire bay is reserved (18), and if this is the case the operating sequence is interrupted (24);
- if the afore-said is not the case, the other switching devices in the same bay are reserved as well as all bays included in the switchgear (19,20);
- thereafter it is checked whether all the bays are reserved (21), and, if a clearance signal about this is not received within a predetermined time (22), the operating sequence is interrupted (24);
- when a clearance signal that all the bays are reserved is received within the predetermined time, it is checked whether the switching device which is to be operated is interlocked (23), and if this is the case the operating sequence is interrupted (24); whereas
- if the switching device which is to be operated is not interlocked, the reservation is completed and the switching device can be operated (25).

## Patentansprüche

1. Verfahren zur Blockierung und Verriegelung in Verbindung mit der Betätigung elektrischer Schaltgeräte (8, 9, 10), die in einer Vielzahl von Feldern (1, 2, 3) vorhanden sind, die zu einer Schaltanlage gehören, wobei die Steuerung zwischen den Feldern über einen Kommunikationsbus (4) mit einem computergestützten seriellen Übertragssystem mit je einem Computer in jedem Feld erfolgt, **dadurch gekennzeichnet,** daß, wenn ein Befehl zur Betätigung eines Schaltgeräts (8, 9, 10) gegeben wird, die folgenden Schritte, die eine Reservierungsfunktion einschließen, ausgeführt werden:
- es wird geprüft, ob das betreffende Schaltgerät reserviert oder blockiert ist (17), und wenn dies der Fall ist, wird die Betätigungsfolge unterbrochen;
- wenn das zuvor Gesagte nicht der Fall ist, wird geprüft, ob irgendein anderes Schaltgerät desselben Feldes (1, 2, 3) zur gleichen Zeit eine Betätigungserlaubnis empfängt oder ob das gesamte Feld reserviert ist (18), und wenn dies der Fall ist, wird die Betätigungsfolge unterbrochen (24);
- wenn das zuvor Gesagte nicht der Fall ist, werden sowohl die anderen Schaltgeräte in demselben Feld reserviert als auch sämtliche zu der Schaltanlage gehörenden Felder (19, 20);
- danach wird geprüft, ob alle Felder reserviert sind (21), und wenn bezüglich dieser Prüfung kein Freigabesignal innerhalb einer vorbestimmten Zeit (22) eintrifft, wird die Betätigungsfolge unterbrochen (24);
- wenn ein Freigabesignal, wonach alle Felder reserviert sind, innerhalb der vorgegebenen Zeit eintrifft, wird geprüft, ob das zu betätigende Schaltgerät verriegelt ist (23), und, wenn dies der Fall ist, wird die Betätigungsfolge unterbrochen (24); wogegen,
- wenn das zu betätigende Schaltgerät nicht verriegelt ist, die Reservierung abgeschlossen ist und das Schaltgerät betätigt werden kann (25).

## Revendications

1. Procédé de blocage et de verrouillage concernant le fonctionnement de dispositifs (8,9,10) de commutation électrique compris dans une baie parmi une pluralité de baies (1,2,3) appartenant à un appareillage électrique, la commande entre les baies étant réalisée au moyen d'un bus (4) de communication ayant un système de communication en série programmé par ordinateur ayant un ordinateur dans chaque baie, caractérisé en ce que lorsqu'un ordre de fonctionnement d'un dispositif (8,9,10) de commutation est envoyé, les étapes suivantes comportant une fonction de réservation sont exécutées :
- il est vérifié que le dispositif de commutation en question est réservé ou bloqué (17) et si cela est le cas, la séquence de fonctionnement est interrompue ;
- si dans le cas mentionné précédemment, la réponse est négative, il est vérifié que tout autre dispositif de commutation dans la même baie (1,2,3) a simultanément reçu la permission de fonctionner ou que la baie entière est réservée (18), et si cela est le cas, la séquence de fonctionnement est interrompue (24) ;
- si cela n'est pas le cas, les autres dispositifs de commutation dans la même baie sont réservés ainsi que toutes les baies qui sont comprises dans l'appareillage (19,20) électrique ;
- ensuite il est vérifié si toutes les baies sont réservées (21), et, si un signal de libération concernant cela n'est pas reçu au bout d'un intervalle (22) de temps prédéterminé, la séquence de fonctionnement est interrompue (24);
- lorsqu'un signal de libération suivant lequel toutes les baies sont réservées est reçu durant l'intervalle de temps prédéterminé, il est vérifié que le dispositif de commutation qui doit être mis en fonctionnement est verrouillé (23), et si cela est le cas la séquence de fonctionnement est interrompue (24) ; tandis que
- si le dispositif de commutation qui doit être mis en fonctionnement n'est pas verrouillé, la réservation est achevée et le dispositif de commutation peut être mis en fonctionnement (25).
